# EUROPEAN PATENT APPLICATION

(11) **EP 2 712 164 A1**
(43) Date of publication of application: **26.03.2014**
(21) Application number: 13181467.5
(22) Date of filing: 23.08.2013
(51) Int. Cl.: H04N 1/00, H04N 1/32

(54) **System for transmitting image and associated message data**

(30) Priority: 21.09.2012 KR 20120105272
(71) Applicant: Samsung Electronics Co., Ltd, Gyeonggi-do 443-742 (KR)
(72) Inventor: Song, Ga-Jin, Gyeonggi-do (KR)
(74) Representative: Gover, Richard Paul

(57) **Abstract**

An electronic device for acquiring and transmitting a photo by operating a camera, acquiring an image of a subject using the camera, storing the image of the acquired subject and automatically transmitting the image to a predetermined different electronic device, and, in response to occurrence of a state where a preview screen has been previously displayed, transmitting or receiving a message associated with the automatically transmitted image.

## Description

### FIELD OF THE INVENTION

The present invention relates to a system for transmitting an image to another electronic device and processing associated message data.

### BACKGROUND

Known smart phones, tablet Personal Computers (PCs) and the like are typically equipped with cameras for photo acquisition. Further, various known interfaces are used for transmitting an image taken through a camera to other electronic devices. Typically in known systems, to transmit an image taken using a camera in an electronic device to another electronic device, a user performs a process of taking the image, executing a messenger application (e.g., Kakaotalk) enabling image transmission, selecting another electronic device for transmitting the image and selecting an image in an image storage application (e.g., a gallery) to transmit the selected image through the messenger application, for example. This is an elaborate, complex burdensome process.

A user receiving the transmitted image typically just receives images selected and transmitted by a transmission side user and cannot receive the full number of images taken even though the user may desire to receive them. For instance, in a case where a mother takes anniversary photos of a baby, she needs to select and transmit particular photos without being able to forward the full number of photos taken. A system according to invention principles addresses these deficiencies and related problems and provides a system for seamlessly automatically transmitting a photo taken in an electronic device, to another electronic device, in a user friendly manner.

### SUMMARY

A system according to invention principles automatically transmits an image taken by an electronic device, to a predetermined different electronic device and transmits and receives a message associated with an image taken using a camera application in the electronic device. The system displays an image transmission status and a message transmitted or received associated with an image stored in the electronic device.

The system in response to camera operation, acquires an image of a subject, stores the image and automatically transmits the image to a predetermined different electronic device, and, in a state where a preview screen is or has been previously displayed, transmits or receives a message associated with the automatically transmitted image.

According to another aspect of the invention, the system transmits a photo (image) stored in an electronic device using one or more processors for executing computer programs. An Input/Output (I/O) unit performs input/output operations, a camera acquires images, a memory stores data and executable instructions comprising one or more programs configured to be executable by the one or more processors. The program includes executable instructions supporting camera operation including for acquiring images of a subject using the camera, storing an image of the subject and automatically transmitting the image to a predetermined different electronic device, and, in a state where a preview screen is or has been displayed, transmits or receives a message for the automatically transmitted image.

### BRIEF DESCRIPTION OF THE DRAWINGS

The above and other features and advantages of the present invention will become more apparent from the following detailed description when taken in conjunction with the accompanying drawings in which:
FIG. 1A is a diagram illustrating an electronic device for transmitting a photo according to an exemplary embodiment of the present invention;
FIG. 1B is a block diagram illustrating a processor of an electronic device for transmitting a photo according to an exemplary embodiment of the present invention;
FIG. 2A is a flowchart illustrating a procedure for sharing an image taken in an electronic device and a message for the image according to an exemplary embodiment of the present invention;
FIG. 2B is a diagram illustrating a method for sharing an image taken in an electronic device and a message for the image according to an exemplary embodiment of the present invention;
FIGS. 3A and 3B comprise a flowchart illustrating an operation procedure of a camera application in an electronic device according to an exemplary embodiment of the present invention;
FIG. 4 is a User Interface (UI) diagram illustrating a contact item for transmitting an image in an electronic device according to an exemplary embodiment of the present invention;
FIG. 5 is a diagram illustrating face recognition in an image taken in an electronic device according to an exemplary embodiment of the present invention;
FIG. 6 is a diagram illustrating a preview screen in an electronic device according to an exemplary embodiment of the present invention;
FIG. 7 is a diagram illustrating a progress bar showing degree of image transmission in an electronic device according to an exemplary embodiment of the present invention;
FIG. 8 is a diagram illustrating displaying a received message on a preview screen in an electronic device according to an exemplary embodiment of the present invention;
FIG. 9 is a diagram illustrating displaying the number of unchecked messages in an electronic device according to an exemplary embodiment of the present invention;
FIG. 10 is a diagram illustrating a transmission history mode in an electronic device according to an exemplary embodiment of the present invention;
FIG. 11 is a diagram illustrating displaying an image edited according to a wallpaper edition mode in an electronic device according to an exemplary embodiment of the present invention;
FIG. 12 is a diagram illustrating another example of displaying an image edited according to a wallpaper edition mode in an electronic device according to an exemplary embodiment of the present invention;
FIG. 13 is a diagram illustrating displaying a virtual keyboard in an electronic device according to an exemplary embodiment of the present invention;
FIG. 14 is a diagram illustrating a transmission history mode in which a wallpaper image has been edited in an electronic device according to an exemplary embodiment of the present invention; and
FIG. 15 is a diagram illustrating a transmission history mode in which a wallpaper image has been edited in an electronic device according to an exemplary embodiment of the present invention.

### DETAILED DESCRIPTION

Embodiments of the present invention are described herein below with reference to the accompanying drawings. For the purposes of clarity and simplicity, well-known functions or constructions are not described in detail as they would obscure the invention in unnecessary detail. And, terms described below, which are defined considering functions in the present invention, can be different depending on user and operator's intention or practice. Therefore, the terms should be defined on the basis of the disclosure throughout this specification.

In the following description, an electronic device includes a mobile communication terminal with a camera, a smart phone, a tablet Personal Computer (PC), a digital camera, a laptop computer, a netbook computer, a computer and the like. As used herein a message is "associated with" an image if it is received in response to transmission of the image or reception of the image.

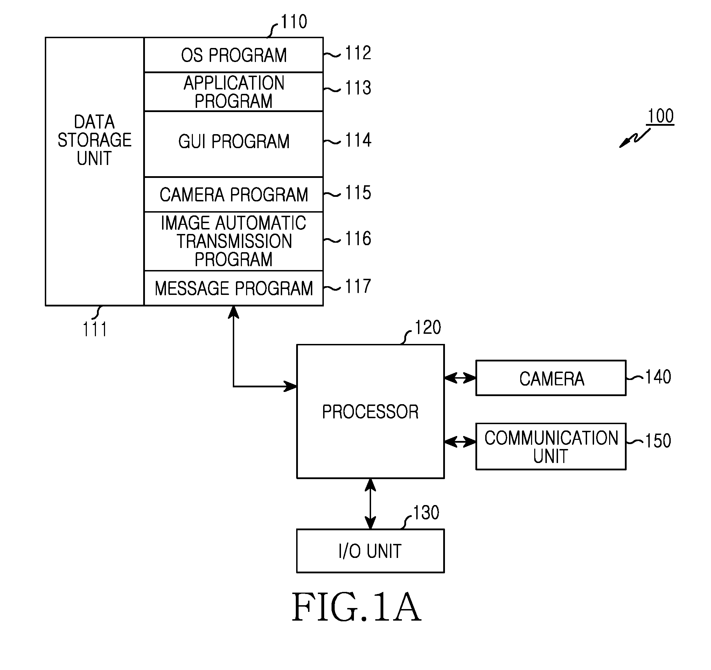

FIG. 1A is a diagram illustrating a construction of an electronic device for transmitting a photo. Electronic device 100 includes a memory 110, a processor 120, an Input/Output (IO) unit 130, a camera 140, and a communication unit 150, or any combination thereof. The memory 110 and the processor 120 comprise a plurality of memories 110 and at least one processor (processing device) 120, respectively.

The memory 110 includes a data storage unit 111, an Operating System (OS) program 112, an application program 113, a Graphical User Interface (GUI) program 114, a camera program 115, an image automatic transmission program 116, and a message program 117 for example. Also, the program comprises a software element expressed as a set of instructions and may be also expressed as a module. The memory 110 stores at least one or more programs including instructions for performing an exemplary embodiment of the present invention.

The data storage unit 111 stores data generated during the execution of a function corresponding to the program stored in the memory 110. The data storage unit 111 stores at least one or more user contacts. In an exemplary embodiment, a contact includes at least one of a phone number, an electronic mail (e-mail), and an address. Also, each user contact can be mapped with an image representing a face of a corresponding user, and the mapping result can be stored. Further, the data storage unit 111 stores at least one image of a subject acquired by camera 140 and an image received from another electronic device. Further, the data storage unit 111 can map messages transmitted or received and associated with stored images by corresponding image to determine and store a mapping result. For example, the data storage unit 111 can map each of a message transmitted or received for a 1st image and a message transmitted or received for a 2nd image to each of the 1st and 2nd images to store associated image and message as a mapping result. Also, the data storage unit 111 can store a wallpaper image for decorating the stored images. In an exemplary embodiment, the wallpaper image includes at least one of a Polaroid photo image, a frame image, a note image, and a diary image.

The OS program 112 (for example, a built-in operating system such as WINDOWS, LINUX, Darwin, RTXC, UNIX, OS X, or VxWorks) includes various software elements controlling general system operation. For example, control of the general system operation comprises memory management and control, storage hardware (device) control and management, power control and management for example. The OS program 112 supports smooth communication between various hardware (devices) and software elements (programs).

The application program 113 includes applications of a browser, e-mail, message processing, word processing, an address book, a widget, Digital Rights Management (DRM), voice recognition, voice replication, a position determining function, a location-based service and phone calling, for example.

The graphical user interface program 114 includes at least one software element for providing a graphical user interface (GUI) enabling user interaction with electronic device 100. The graphical user interface program 114 includes at least one software element for displaying on the I/O unit 130 user interface information. The graphical user interface program 114 includes instructions for displaying an image on the I/O unit 130. The image includes at least one of an image of a subject acquired through the camera 140, an image received through the communication unit 150, and an image stored in the memory 110. Also, the graphical user interface program 114 includes instructions for displaying an image overlaying a wallpaper image. For example, the graphical user interface program 114 can add Polaroid photo wallpaper to an acquired image for display as if the acquired image was an image taken through a Polaroid camera. For another example, the graphical user interface program 114 can add frame wallpaper to an acquired image for display as if the acquired image was fitted into a frame. For further example, the graphical user interface program 114 can add note wallpaper to an acquired image for display as if the acquired image was a scrap image put on a note.

Further, if messages for a taken image and a received image are received, the graphical user interface program 114 can display message contents included in the messages. For example, when a camera application is being executed, if a message for an acquired image is received, the graphical user interface program 114 can display all or some of contents included in the received message, in a preview region among regions displayed by the camera application. In another example, when the camera application is not being executed, if the message for an acquired image is received, the graphical user interface program 114 can display a pop-up or notification message, displaying all or some of the contents included in the received message. For further example, when the camera application is being executed, if a message for a received image is received, the graphical user interface program 114 can display all or some of contents included in the received message, in a preview region of the regions displayed by the camera application. For yet another example, when the camera application is not being executed, if the message for the received image is received, the graphical user interface program 114 can display a pop-up or notification message, displaying all or some of the contents included in the received message. Here, the graphical user interface program 114 transparently processes a wallpaper representation of the message displayed in the preview region such that the wallpaper does not hinder a user from viewing the preview screen.

The camera program 115 includes camera-related software enabling camera related processes and functions. If at least one user face is recognized by analyzing an image of a subject acquired by the camera 140, the camera program 115 automatically determines if a contact having a user face image consistent with a recognized user face image exists among contacts stored in the data storage unit 111. Here, the image analysis can be performed using a known image recognition method. If it is determined that the contact having the user face image consistent with the recognized user face image exists, the camera program 115 can select the contact having the user face image consistent with the recognized user face image, and control the image automatic transmission program 116 to automatically transmit an acquired image to the selected contact. The camera program 115 provides a function where, if at least one user face is recognized in an image of a subject acquired from the camera 140, the system extracts a feature from a recognized user face image, determines if an image having a feature consistent with the extracted feature among stored images exists in a contact, and automatically transmits an acquired image to the determined contact.

Alternatively, if the contact having the user face image consistent with the recognized user face image does not exist, the camera program 115 stores an acquired image in the memory 110. Also, the camera program 115 can request contact setting for transmitting a taken image, and set the contact by user control.

If an image of a subject is acquired by the camera 140 in a state where a contact for transmitting an image is selected, the image automatic transmission program 116 controls the communication unit 150 to automatically transmit the acquired image to the previously selected contact. Further, if it is determined that a user face image consistent with a user face image recognized in an image taken by the camera program 115 exists within a contact, the image automatic transmission program 116 controls the communication unit 150 to automatically transmit the acquired image to the determined contact. In an exemplary embodiment, a function of recognizing a user face and automatically transmitting an acquired image can be activated or inactivated by user control.

The message program 117 can input a message for an acquired image. In response to a message input menu being selected in a state where a preview screen has been or is displayed, the message program 117 can display a virtual keyboard and a message input window for inputting a message for a previously acquired image and receive text representing an input message and transmit the received message to a contact to which a previously acquired image is transmitted. The message program 117 provides a function where, if a user inputs a message in a preview state of the camera 140, the system automatically transmits the input message to a contact to which the last image was previously automatically transmitted, without requiring a separate contact setting process.

Further, if a specific image is selected from multiple images stored in the electronic device 100 or images received from another electronic device, the message program 117 can receive input text comprising a message associated with the selected image and transmit the input message. For example, if a specific image is selected from multiple images acquired and previously stored in the electronic device 100, the message program 117 can receive input text comprising a message associated with the selected image and transmit the input message to a contact to which the selected image was previously automatically transmitted. For another example, if the image received from the other electronic device is selected, the message program 117 can receive input text comprising a message for the selected image and transmit the input message to the other electronic device.

Also, the message program 117 can map messages transmitted or received associated with images by corresponding image and store the mapping result. For example, the message program 117 can map messages to identify images transmitted or received associated with a 1st image and to identify images transmitted or received associated with a 2nd image, acquired by the camera 140. For another example, the message program 117 can map each message transmitted or received associated with an image received from another electronic device and a message transmitted or received associated with an image acquired through the camera 140.

The processor 120, although not illustrated, may comprise at least one processor and peripheral interface. Also, the processor 120 executes a specific program (i.e., instruction set) stored in the memory 110 and performs a specific plurality of functions corresponding to the executed program.

The I/O unit 130 includes an input device enabling data input and an output device enabling data output and display, and provides an interface to a user. For example, the I/O unit 130 can be a touch screen enabling concurrent data input and output. The I/O unit 130 can display an acquired image, a wallpaper image, and a message transmitted or received for the acquired image.

The camera 140 takes an image of a subject. In an exemplary embodiment, the acquired image of the subject may be associated with one or more users.

The communication unit 150 can include a radio frequency receiver and transceiver and/or an optical (e.g., infrared) receiver and transceiver. For example, the communication unit 150 can include a wireless communication system supporting one of a Global System for Mobile Communication (GSM) network, an Enhanced Data GSM Environment (EDGE) network, a Code Division Multiple Access (CDMA) network, a Wireless-Code Division Multiple Access (W-CDMA) network, a Long Term Evolution (LTE) network, an Orthogonal Frequency Division Multiple Access (OFDMA) network, a Wireless Fidelity (Wi-Fi) network, Near Field Communication (NFC), Infrared Data Association (IrDA), a Wireless interoperability for Microwave Access (WiMAX) network or/and a Bluetooth network, for example. A wireless communication system is not limited to the wireless communication system supporting the aforementioned networks, and may be a wireless communication system supporting other networks. When a subject is acquired through the camera 140, the communication unit 150 can transmit an acquired image to a preset contact according to the control of the image automatic transmission program 116, and can transmit or receive a message for the transmitted image. Further, the communication unit 150 can receive an image from another electronic device, and transmit or receive a message for the received image.

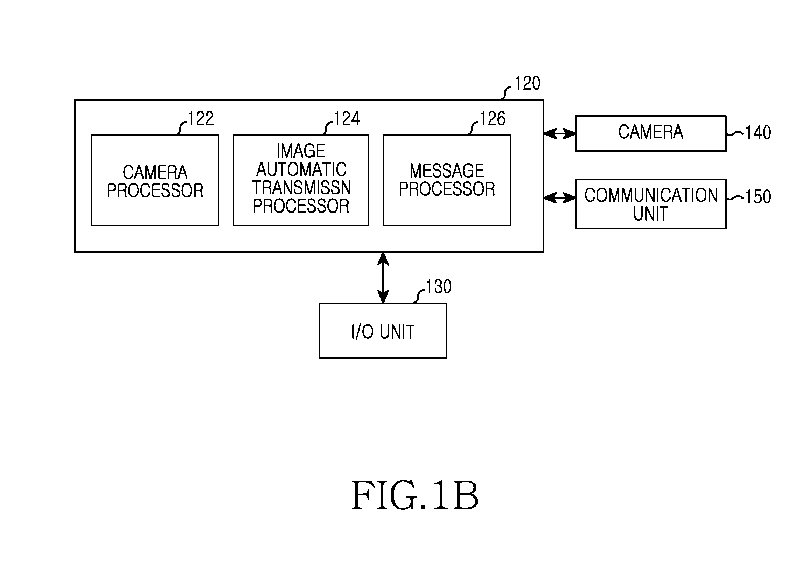

FIG. 1B illustrates a processor of an electronic device for transmitting a photo (image) according to an exemplary embodiment of the present invention. Processor 120 includes a camera processor 122, an image automatic processor 124, and a message processor 126.

The camera processor 122 includes camera-related software element enabling camera related processes and functions. If at least one user face is recognized in an image of a subject acquired by the camera 140, the camera processor 122 determines if a contact having a user face image consistent with a recognized user face image exists. If it is determined that the contact having the user face image consistent with the recognized user face image exists, the camera processor 122 can control the image automatic transmission processor 124 to automatically transmit an acquired image to the contact having the user face image consistent with the recognized user face image. Specifically, if at least one user face is recognized in an image of a subject acquired from the camera 140, the camera processor 122 extracts a feature from a recognized user face image, determines if an image having a feature consistent with the extracted feature among stored images exists in a contact, and automatically transmits an acquired image to the determined contact.

Alternatively, if the contact having the user face image consistent with the recognized user face image does not exist, the camera processor 122 can store an acquired image in the memory 110.

If an image of a subject is acquired through the camera 140 in a state where a contact for transmitting an image is selected, the image automatic transmission processor 124 can control the communication unit 150 to automatically transmit the acquired image to the previously selected contact. Further, if it is determined that a user face image consistent with a user face image recognized in an image taken by the camera processor 122 exists within a contact, the image automatic transmission processor 124 controls the communication unit 150 to automatically transmit the taken image to the determined contact. In an exemplary embodiment, a function of recognizing a user face and automatically transmitting an acquired image can be activated or inactivated by user control.

The message processor 126 can input a message for an acquired image. Specifically, when a message input menu is selected in a state where a preview screen has been displayed, the message processor 126 can display a virtual keyboard and a message input window for inputting text representing a message for a previously acquired image and receive an input message and transmit the received message to a contact to which a previously acquired image was transmitted.

Further, if a specific image is selected from multiple images stored in the electronic device 100 or images received from another electronic device, the message processor 126 can receive text representing an input of a message for the selected image and transmit the input message. For example, if a specific image is selected from multiple images acquired and previously stored in the electronic device 100, the message processor 126 can receive text input comprising a message associated with the selected image and transmit the input message to a contact to which the selected image has been automatically transmitted. For another example, if the image received from another electronic device is selected, the message processor 126 can receive text input comprising a message for the selected image and transmit the input message to another electronic device.

Also, the message processor 126 can map messages transmitted or received by image. For example, the message processor 126 can identify and map messages transmitted or received associated with a 1st image and identify and map messages transmitted or received associated with a 2nd image taken through the camera 140. For another example, the message processor 126 can map each of a message transmitted or received for an image received from other electronic device and a message transmitted or received for an image taken through the camera 140, to each of the images.

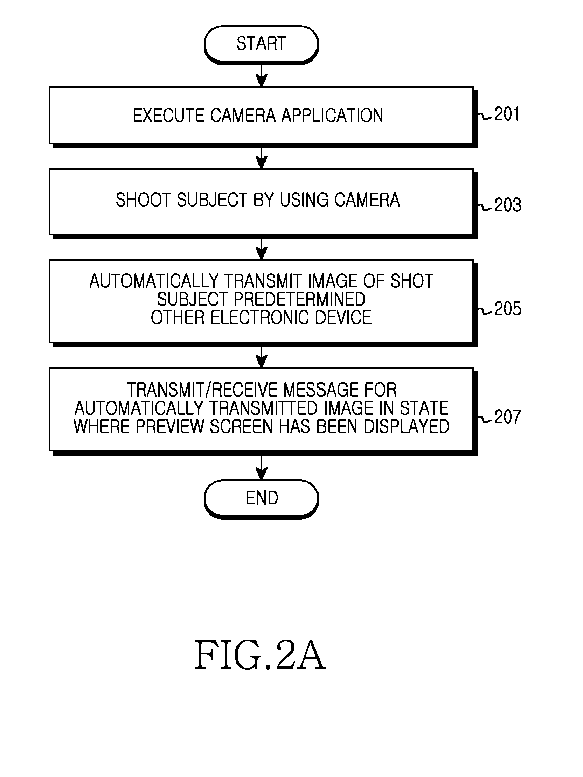

FIG. 2A illustrates a procedure for sharing an acquired image and a message for the image in an electronic device 100. The electronic device 100 executes a camera application in step 201 and proceeds to step 203 and acquires an image of a subject using a camera. In step 205, the electronic device automatically transmits an image of the acquired subject to a predetermined different electronic device. In response to the electronic device 100 previously selecting a contact of a different electronic device as a destination for transmission of an acquired image of a subject, the electronic device automatically transmits the acquired image to the previously selected contact. Alternatively, the device automatically transmits the acquired image to a contact having an image consistent with a user face image recognized in the image of the acquired subject.

In a state of the electronic device where a preview screen has been previously displayed, the electronic device 100 proceeds to step 207 and transmits or receives a message associated with the automatically transmitted image. For example, if a message input menu is selected in a state where the preview screen is selected, the electronic device 100 can display a virtual keyboard and a message input window for inputting a text message, in a predetermined region of the preview screen. In an exemplary embodiment, the electronic device 100 can receive text input comprising a message associated with a previously acquired image, through the virtual keyboard and the message input window. In another example, if the preview screen converts into a screen for displaying stored images and a specific image is selected among the stored images and a message input menu is selected, the electronic device 100 can display a virtual keyboard and a message input window for inputting a text message associated with the selected image.

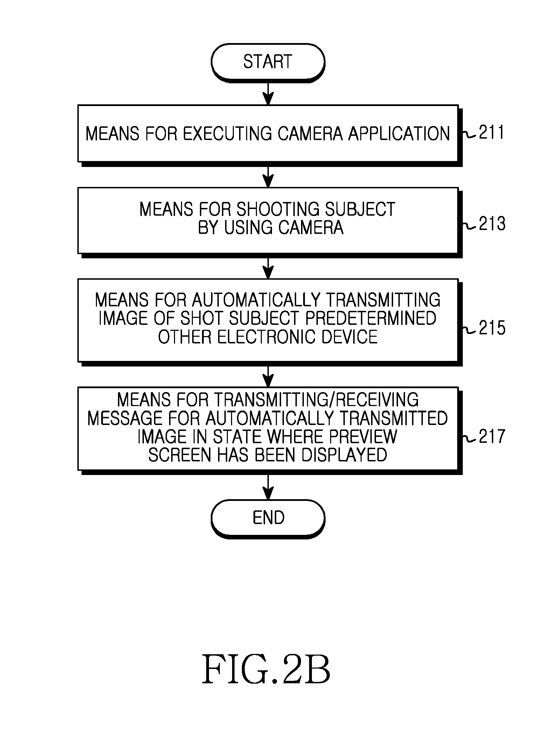

FIG. 2B illustrates a means for sharing an acquired image and a message for the image in an electronic device 100. The electronic device 100 includes a means 211 for executing a camera application, and a means 213 for acquiring images of a subject using a camera. Further, the electronic device 100 includes a means 215 for automatically transmitting an image of the acquired subject to a predetermined different electronic device. In an exemplary embodiment, the electronic device 100 can include a means where, before acquiring an image of the subject, previously selecting or determining a contact of a different electronic device as a destination for image transmission. Also, the electronic device 100 can include a means for recognizing a user face region in the image of the acquired subject and extracting a feature from the recognized user face region, and a means for comparing the extracted feature with a feature of an image existing within a contact. Therefore, the electronic device 100 can include a means for recognizing the user face region in the image of the acquired subject, a means for extracting the feature from the recognized user face region, and a means for searching an image within a contact having a feature consistent with the extracted feature.

Further, the electronic device 100 includes a means 217 for transmitting or receiving a message for the automatically transmitted image in a state where a preview screen has been previously displayed.

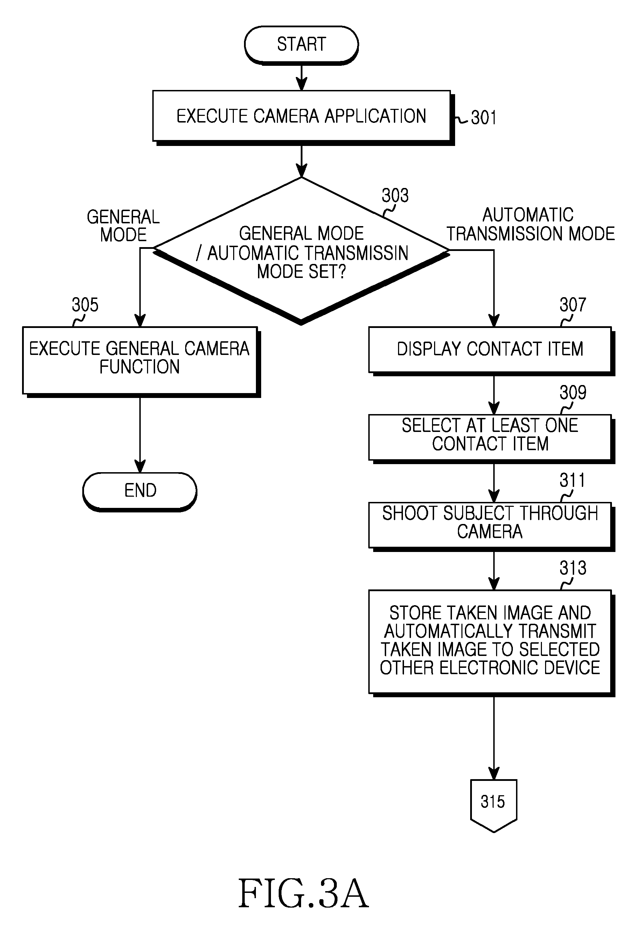

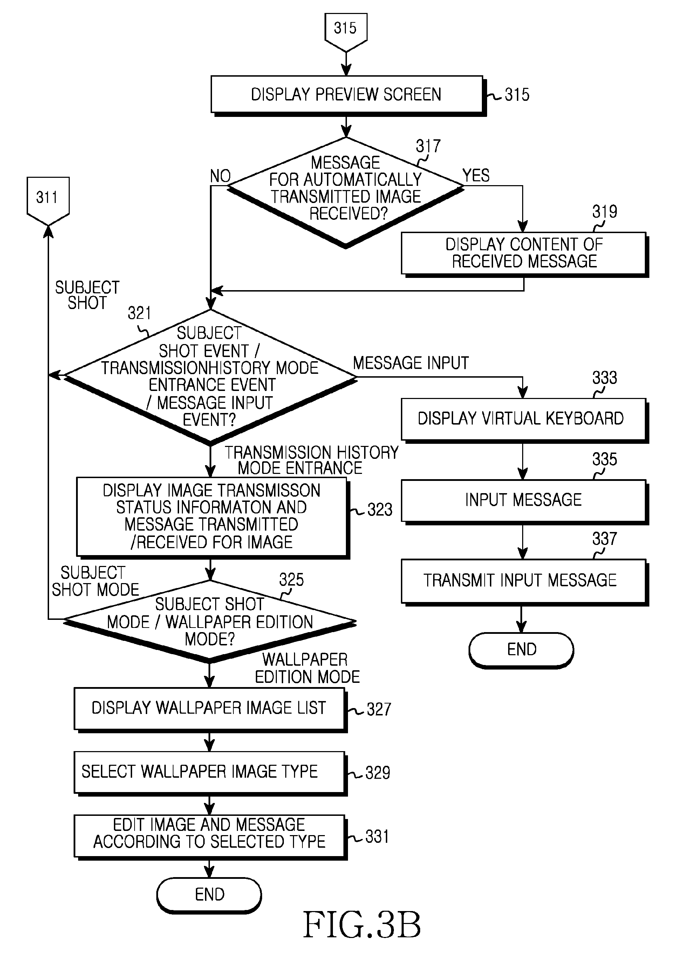

FIGS. 3A and 3B show a method for operation of a camera application in an electronic device 100. In step 301, the electronic device 100 executes a camera application in response to user control. The electronic device 100 in step 303 determines if a current image acquisition mode is a general mode or an automatic transmission mode. Here, the general mode represents a mode of performing a general camera function, and the automatic transmission mode represents a mode of automatically transmitting an acquired image to a preset contact for successively acquired images of one or more subjects. The acquisition mode of the electronic device 100 can be set as a general mode or the automatic transmission mode may be selected in response to user control.

If it is determined in step 303 that the current shooting mode is the general mode, the electronic device 100 executes a general camera function in step 305 and terminates the procedure. For example, if the current shooting mode is the general mode, the electronic device 100 shoots a subject and stores an image of the acquired subject.

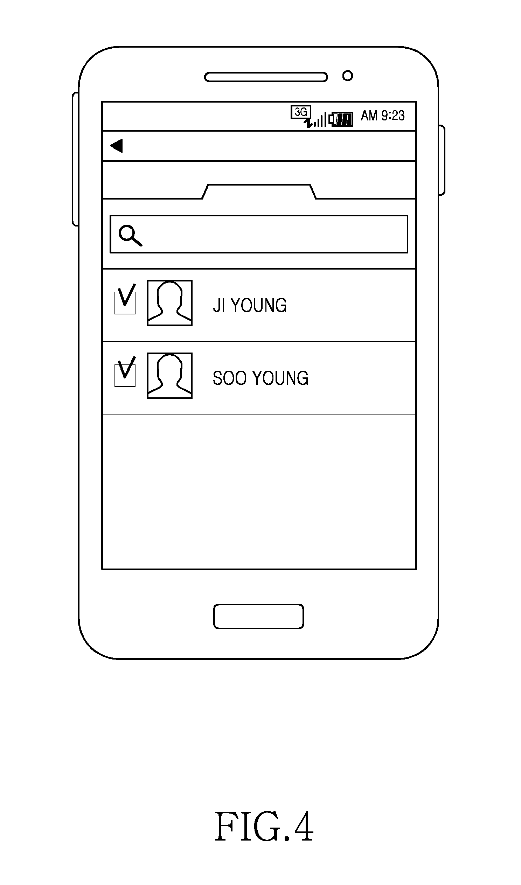

Alternatively, if it is determined in step 303 that the current shooting mode is the automatic transmission mode, the electronic device 100 displays a previously stored at least one contact item in step 307 and proceeds to step 309 and selects at least one contact item in response to user control. For example, as illustrated in FIG. 4, the electronic device 100 can display a contact item and previously select contacts of 'Ji Young' and 'Soo Young' in response to user command.

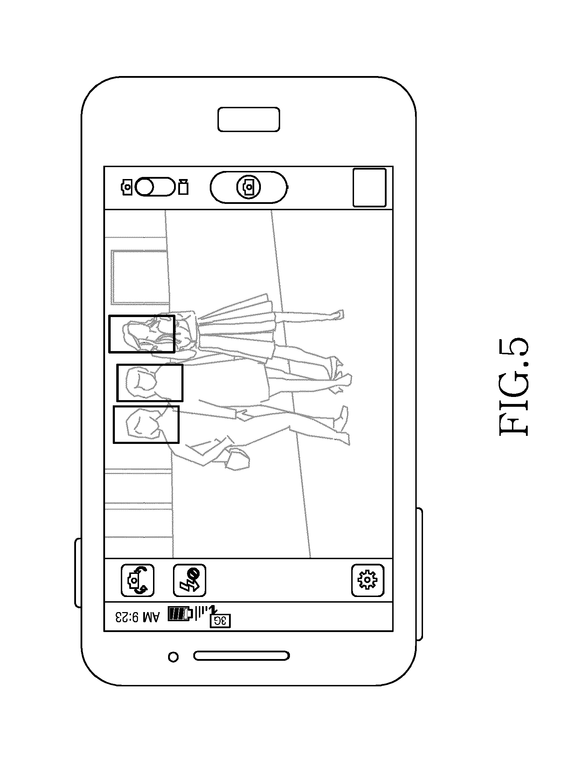

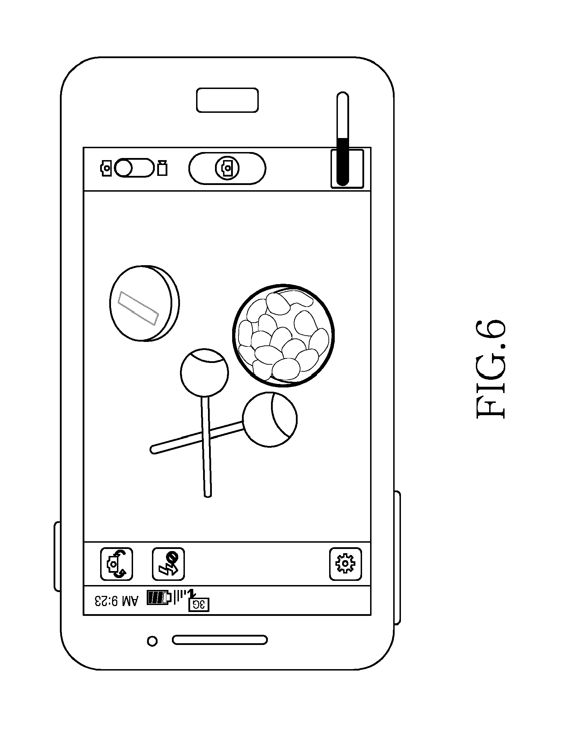

In step 311, the electronic device 100 performs a preview for real-time display on a screen of an image seen through a camera, and acquires a subject in response to a user command. The electronic device 100 proceeds to step 313 and stores an acquired image and substantially concurrently, automatically transmits the acquired image to a selected different electronic device. For example, where an image is acquired of a subject in a state where the 'Ji Young' and 'Soo Young' contacts are previously selected to transmit an image, the electronic device 100 automatically transmits the acquired image to the previously selected contacts of 'Ji Young' and 'Soo Young' without user separate additional interaction and command and concurrently, stores the acquired image in a memory. In another example, if an image is acquired in a state where the current image acquisition mode is an automatic transmission mode but a contact for automatically transmitting an acquired image has not previously been set, the electronic device 100 recognizes a human face in the acquired image as illustrated in FIG. 5 and extracts a feature of a human face and determines if an image having a feature consistent with the extracted feature exists in a contact. If the image having the feature consistent with the extracted feature exists in the contact, the electronic device 100 automatically transmits the acquired image to the corresponding contact. In step 315, the electronic device 100 displays a preview screen. For example, in response to acquisition of an image of a subject, the electronic device 100 displays a preview screen for continuing image acquisition of the subject acquired, as illustrated in FIG. 6.

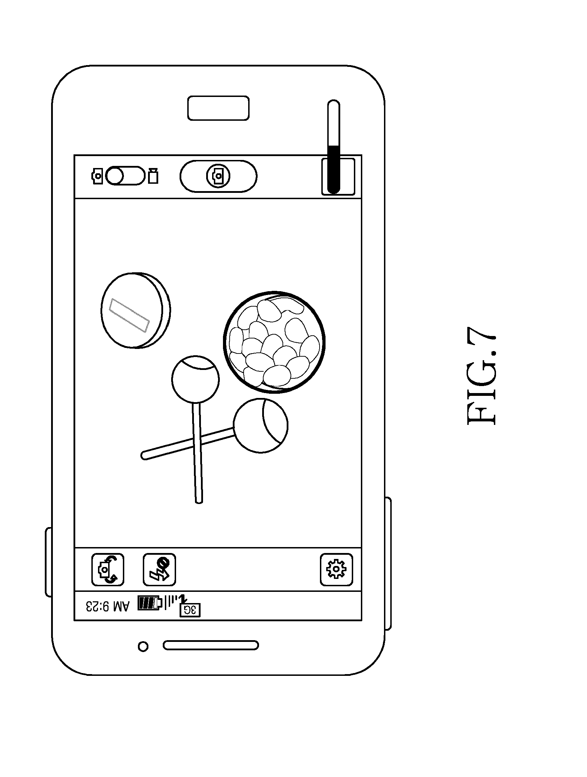

Further, the electronic device 100 displays a graphic element representing progress of image transmission, in a region other than a preview screen region. The graphic element comprises at least one of a progress bar, a percentage, and other graphic elements for representing progress of image transmission. For example, when an acquired image is automatically transmitted, as illustrated in FIG. 7, the electronic device 100 can display the progress bar in the region other than the preview screen region to show a degree of image transmission.

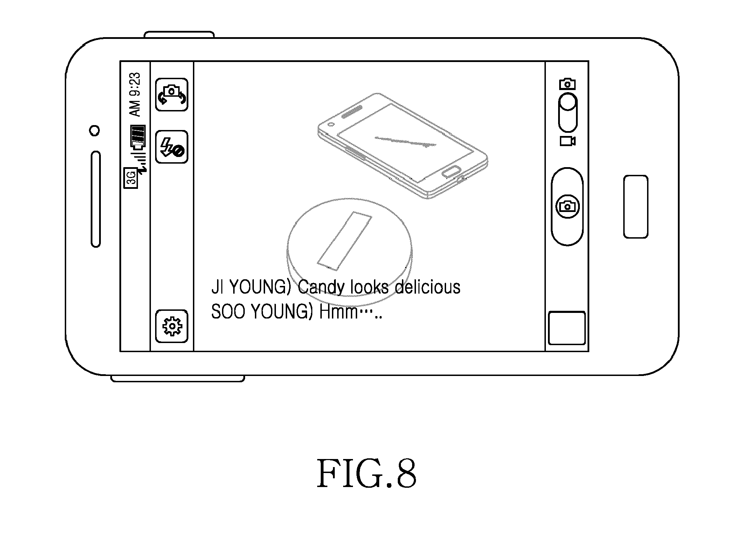

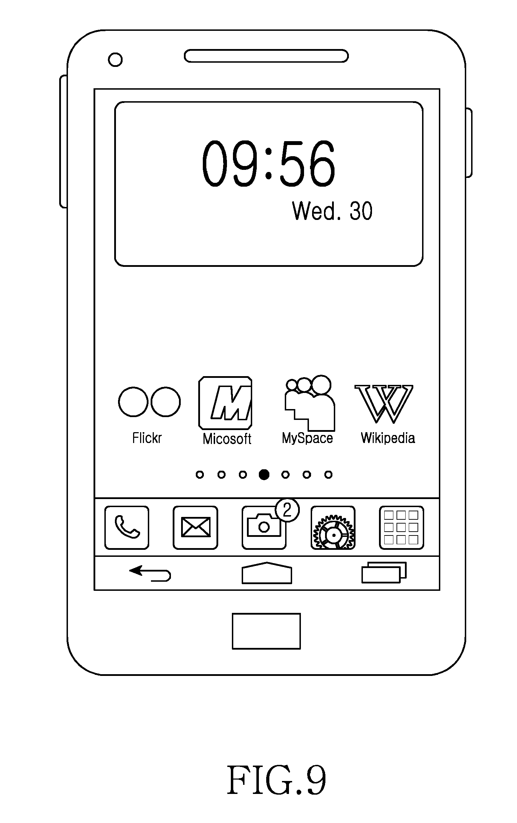

The electronic device 100 in step 317 determines if a message associated with the automatically transmitted image is received. If a message associated with the automatically transmitted image is received, the electronic device 100 in step 319 displays the contents of the received message in a predetermined region of the preview screen. For example, if the message associated with the automatically transmitted image is received when the preview screen is being displayed, the electronic device 100 displays the contents of the received message in a region of the preview screen as illustrated in FIG. 8. In an exemplary embodiment, the electronic device 100 transparently processes a wallpaper background of the message displayed in the preview screen region such that the wallpaper does not hinder a user from viewing the preview screen. In another example, if the message for the automatically transmitted image is received when a screen other than the preview screen is being displayed, the electronic device 100 can display all or some of the contents of the received message in a form of a pop-up or notification message. If the received message is not checked by a user, as illustrated in FIG. 9 (showing 2 unchecked messages in the camera application icon), the electronic device 100 can display the number of unchecked messages on an icon of a camera application.

Alternatively, if it is determined in step 317 that the message for the automatically transmitted image is not received, the electronic device 100 in step 321 determines if one event occurs of, a subject acquired event, a transmission history mode entrance event, and a message input event. The electronic device 100 can display a menu or item for generating one event of the subject acquired event, the transmission history mode entrance event, and the message input event.

If it is determined in step 321 that the subject acquired event occurs, the electronic device 100 returns to step 311 and again performs the subsequent steps. Here, the subject acquired event can occur by user selection of an image acquisition key.

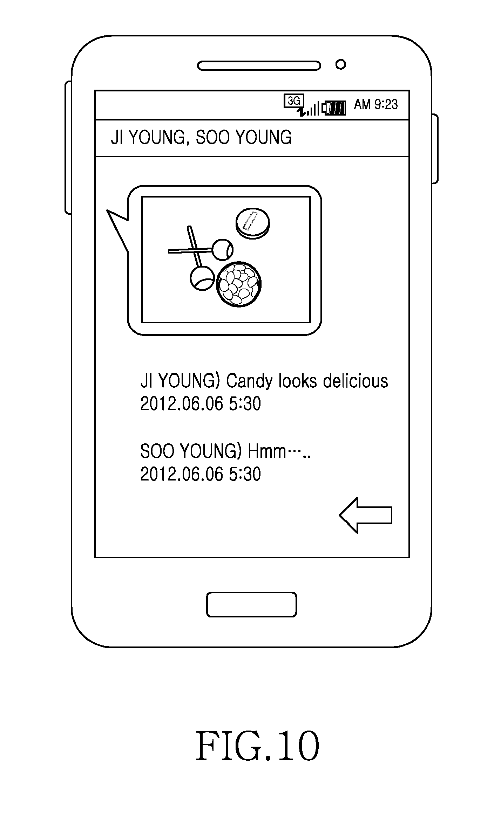

If it is determined in step 321 that the transmission history mode entrance event occurs, the electronic device 100 in step 323 displays image transmission status information and a message transmitted or received for the image. Here, the transmission history mode entrance event can occur through a selection of an icon or image displayed in the region other than the preview screen, or can occur through a selection of a specific key or menu item. The electronic device 100 having entered a transmission history mode can display the image transmission status information and the message transmitted or received associated with individual particular image. For example, in transmission history mode, as illustrated in FIG. 10, the electronic device can display a transmission or reception message associated with an automatically transmitted image and an associated message transmission or reception time. Also, the electronic device 100 displays an indication that image transmission is 100% complete.

In step 325, the electronic device 100 determines if it is set to a mode of, a subject acquired mode and a wallpaper edit mode. If the electronic device 100 is set to the subject acquired mode, the electronic device 100 returns to step 311 and again performs the subsequent steps.

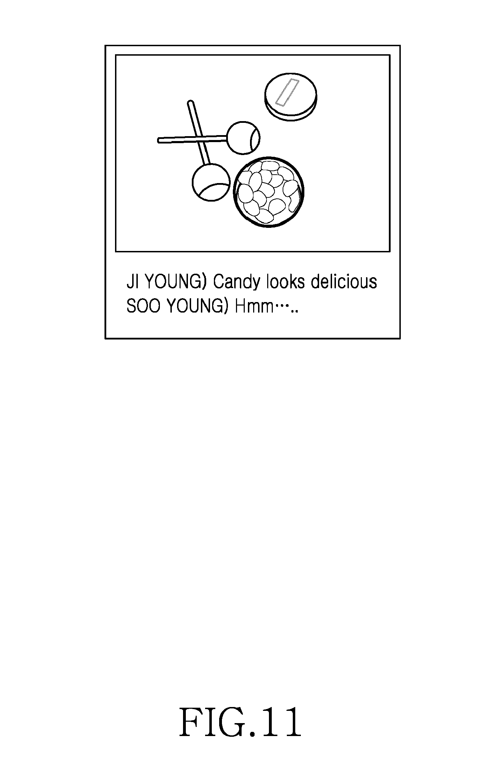

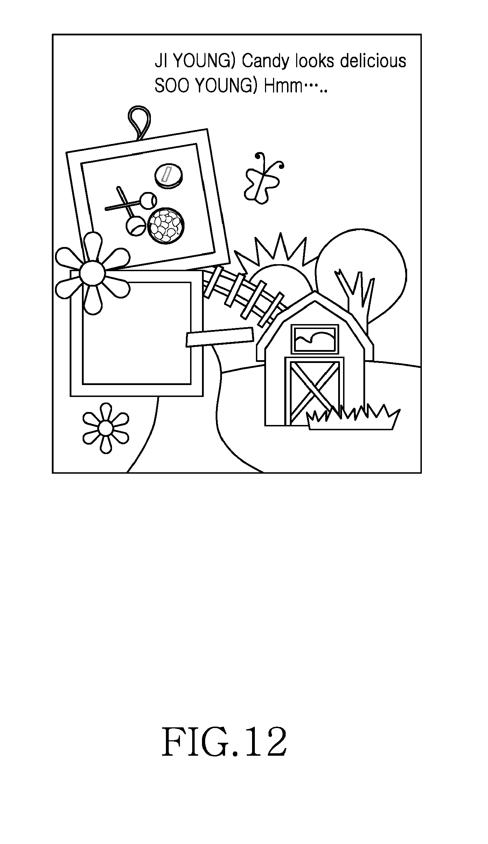

Alternatively, if it is determined in step 325 that the electronic device 100 is set to the wallpaper edit mode, the electronic device 100 proceeds to step 327 and displays a wallpaper image list and in step 329 selects a wallpaper image type in response to user command. The wallpaper image type includes at least one of a Polaroid photo type, a frame type, a note type, and a diary type. The electronic device 100 in step 331 edits the image and the message in response to the selected wallpaper image type and terminates the procedure. The electronic device 100 can arrange and display a transmitted or received image and a message for the transmitted or received image on a selected wallpaper image in response to user command or predetermined information. The wallpaper image type may be previously stored or may be updated or deleted in response to user command. For example, when the selected wallpaper image is of a Polaroid type, as illustrated in FIG. 11, the electronic device 100 can add a transmitted or received image and a transmitted or received message to a Polaroid photo wallpaper, displaying the image as if it was taken through a Polaroid camera. In another example, when the selected wallpaper image is of a frame type, as illustrated in FIG. 12, the electronic device 100 can add a transmitted or received image and a transmitted or received message to frame wallpaper, displaying as if it was an acquired image fitted into a frame.

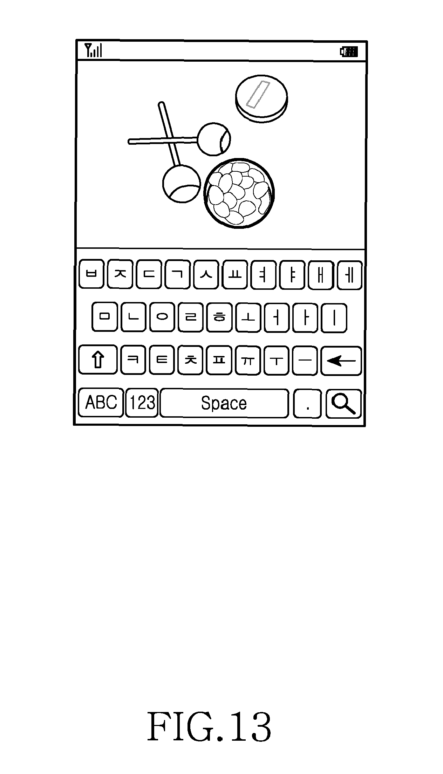

If the message input event occurs in step 321, the electronic device 100 proceeds to step 333 and displays a virtual keyboard and then, proceeds to step 335 and receives an input of a message. In an exemplary embodiment, the electronic device 100 can determine whether to receive an input of a message for any image in response to a screen that is being currently displayed. For example, when a preview screen is being displayed, the electronic device 100 can display a virtual keyboard in a predetermined region of the preview screen and then, receive an input of a message for a just before taken and automatically transmitted image. For another example, when an acquired image is being displayed, as illustrated in FIG. 13, the electronic device can display a virtual keyboard on a screen on which the taken image is being displayed and receive a text input comprising a message associated with the image that is being displayed. The electronic device 100 in step 337 and transmits the message that is input associated with the image and the process of Figure 3 terminates.

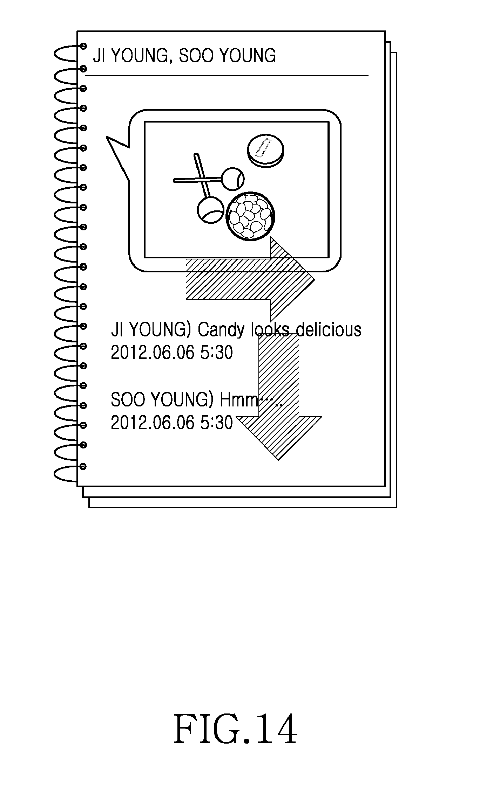

FIG. 14 shows a transmission history mode in which a wallpaper image has been edited in an electronic device. A wallpaper image is edited into note form by a wallpaper edit menu in a transmission history mode. The electronic device 100 can display a transmitted or received image and a message associated with the transmitted or received image as if scrap image and message were put on a note. Particularly, if a displayed note image is dragged up to down or down to up, the electronic device 100 can scroll up or down the note image in response to the drag movement, displaying the transmitted or received image. At this time, the electronic device 100 can display the latest transmitted or received message uppermost.

Further, if the displayed note image is dragged from left to right or from right to left, the electronic device 100 can display an effect of turning a note in response to the drag, displaying a transmission history by time of a transmitted or received image. If the displayed note image is dragged from left to right, the electronic device 100 can display an effect of turning a displayed note to a previous page and display a transmission history of an image transmitted or received earlier than an image that is being displayed currently. Alternatively, if the displayed note image is dragged from right to left, the electronic device 100 can display an effect of turning the displayed note to a next page and display a transmission history of an image transmitted or received later than the image that is being displayed currently.

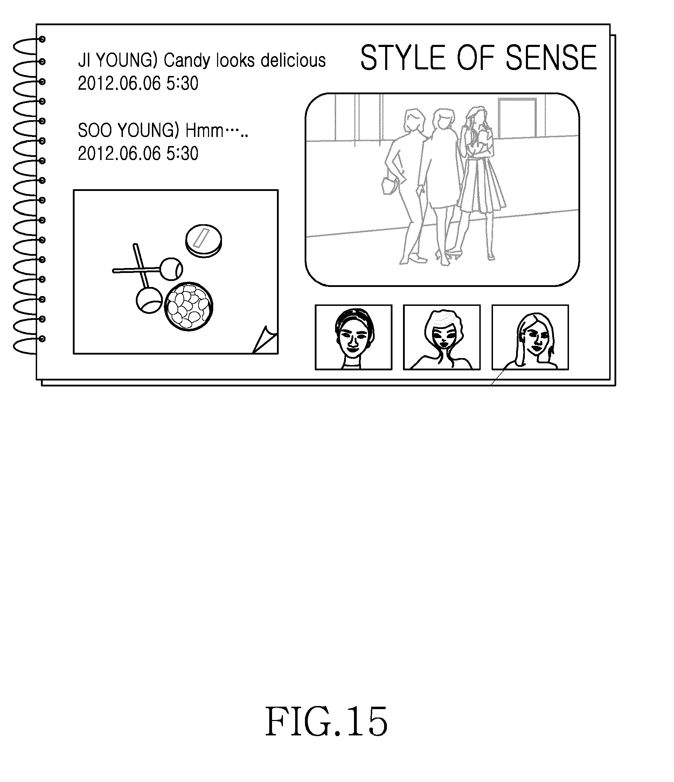

Further, as illustrated in FIG. 15, the electronic device 100 can change an arrangement of a transmitted or received image and a transmitted or received message, displaying the changed image and message.

Exemplary embodiments of the invention described in this specification and all function operations and method steps thereof can be implemented by computer software including structures disclosed in this specification and equivalent structures thereof, firmware, hardware or a combination of one or more of them. Also, the exemplary embodiments of the invention described in this specification can be implemented by one or more computer program products, i.e., data processing devices, or can be implemented by one or more modules of computer program instructions encoded on a computer readable medium for controlling operations of these devices.

The computer readable medium can be a machine readable storage medium, a machine readable storage substrate, a memory device, a construction of substance affecting a machine readable radio wave stream, or a combination of one or more of them. The term of data processing device includes, for example, data processing equipment, devices and machines including a programmable processor, a computer or a multi-processor or computer. The equipment can include a code added to hardware and generating an execution environment for a corresponding computer program, for example, a code constructing a processor firmware, a protocol stack, a database management system, an operation system, or a combination of one or more of them.

While the invention has been shown and described with reference to certain preferred embodiments thereof, it will be understood by those skilled in the art that various changes in form and details may be made therein without departing from the spirit and scope of the invention as defined by the appended claims. No claim element herein is to be construed under the provisions of 35 U.S.C. 112, sixth paragraph, unless the element is expressly recited using the phrase "means for".

## Claims

1. A method employed by an electronic device, comprising:
employing at least one processing device for
operating a camera of a first electronic device;
acquiring an image of a subject using the camera;
storing the image of the acquired subject and automatically transmitting the image to a predetermined second electronic device; and
in response to occurrence of a state where a preview screen has been displayed by the first electronic device, at least one of,
(a) transmitting and
(b) receiving a message, associated with the automatically transmitted image.

2. The method of claim 1, further comprising, before acquiring the image of the subject using the camera, selecting a contact identifying a message recipient as a destination for the transmitted image of the subject.

3. The method of claim 1, wherein transmitting or receiving the message for the automatically transmitted image in the state where the preview screen has been displayed further comprises,
sensing a selection of a message input menu in the state where the preview screen has been displayed;
in response to selection of the message input menu, displaying a keyboard on the preview screen;
receiving text input comprising a message entered using the keyboard; associating the input message with the automatically transmitted image; and transmitting the input message to the second electronic device.

4. The method of claim 1, further comprising, in response to a message associated with the automatically transmitted image being received from the second electronic device, displaying the received message on the preview screen.

5. The method of claim 1, further comprising displaying transmission status information of the automatically transmitted image in the state where the preview screen has been displayed.

6. The method of claim 1, further comprising the activities of:
displaying the stored image in the state where the preview screen has been displayed;
sensing selection of a message input menu in the state where the stored image has been displayed;
in response to a message input menu being selected, displaying a keyboard;
receiving text input comprising a message entered using the keyboard;
associating the input message with the displayed image; and
transmitting the input message.

7. The method of claim 6, further comprising initiating a state of displaying transmission or reception status information of the stored image and a message history transmitted or received for the stored image.

8. The method of claim 1, wherein storing the image of the acquired subject and automatically transmitting the image to the predetermined second electronic device, further comprise:
recognizing a user face in the image of the acquired subject;
extracting a feature from the image of the recognized user face;
determining if an image having a feature consistent with the extracted feature exists within a contact; and
in response to the image having the extracted feature consistent with the the contact, storing the image of the acquired subject and automatically transmitting the image to the determined contact.

9. The method of claim 1, further comprising:
determining a wallpaper image type; and
arranging and displaying the stored image and the transmitted or received message on a wallpaper image of the determined wallpaper image type.

10. The method of claim 9, wherein the wallpaper image type comprises at least one of a Polaroid photo image, a frame image, a note image, and a diary image.

11. An electronic device comprising:
at least one processor for executing computer programs;
an Input-Output (I/O) unit for performing input-output operations;
a camera for acquiring images;
at least one memory for storing data and executable instructions; and
one or more programs stored in the at least one memory and configured to be executable by the one or more processors,
wherein the one or more programs comprise instructions supporting camera operation, acquiring an image of a subject using the camera, storing an image of the acquired subject and automatically transmitting the image to a predetermined second electronic device, and, in a state where a preview screen has been displayed, at least one of,
(a) transmitting and
(b) receiving a message, associated with the automatically transmitted image.

12. The electronic device of claim 11, wherein the program further comprises an instruction of, before shooting the subject by using the camera, previously selecting a contact for transmitting the image of the subject.

13. The electronic device of claim 11, wherein the program comprises executable instructions for sensing a selection of a message input menu in the state where the preview screen has been displayed, in response to the message input menu being selected, displaying a keyboard on the preview screen, receiving text input comprising a message entered using the keyboard, associating the input message with the automatically transmitted image, and transmitting the input message to the second electronic device.

14. The electronic device of claim 11, wherein the program further comprises executable instructions for, in response to the message associated with the automatically transmitted image being received from the second electronic device, displaying the received message on the preview screen.

15. The apparatus of claim 11, wherein the apparatus arranged to implement a method of one of claims 5 to 10.
